# EUROPEAN PATENT APPLICATION

(11) **EP 3 147 497 A1**
(43) Date of publication of application: **29.03.2017**
(21) Application number: 15290238.3
(22) Date of filing: 22.09.2015
(51) Int. Cl.: F03B 3/06, F03B 3/14

(54) **RUNNER UNIT FOR A HYDRO TURBINE**

(71) Applicant: ALSTOM Renewable Technologies, 38100 Grenoble (FR)
(72) Inventor: Bertea, Jean Francois, 07300 Saint Jean De Muzols (FR); Bremond, Jacques, 38120 Saint-Egrève (FR); Loiseau, Fabrice, 38360 Sassenage (FR); Phan Hai, Trieu, 38100 Grenoble (FR)
(74) Representative: Brannen, Joseph Waclaw

(57) **Abstract**

The present invention generally relates to hydro turbine. The runner unit according to the present invention allows adjusting the gap clearance downstream and between the runner end tip portion and the inner edge of the blades. This gap clearance may depend on the angular position of the runner blades.

## Description

### TECHNICAL FIELD

The present invention generally relates to a hydro turbine, and more particular to a runner unit of the hydro turbine. The invention may also apply to a tidal turbine.

### BACKGROUND

As well known, hydro power plants are arranged to convert into electricity the potential and kinematic energies of rivers and/or lakes as well as sea tides. The turbine housing may include a Kaplan or a bulb runner unit comprising a plurality of blades fit thereon which are moved by the flow of water, The Kaplan of the bulb runner is integral to a rotating shaft which cooperates with an electricity generator.

Double regulated turbine have conventionally a flat performance hill chart in flow, nevertheless it can be observed a significant drop of efficiency at full load due to a poor performance of the draft tube.

### SUMMARY OF THE INVENTION

It is an object of the present invention to solve the aforementioned technical problem by providing a runner unit for a hydro turbine as substantially defined according to independent claim 1.

It is a further object of the present invention to provide a hydro turbine as substantially defined in dependent claim 8.

It has been observed that the increase of the gap clearance between the blades and the runner hub at the downstream of the blade revealed to be an efficient solution to solve the above-mentioned technical problem. The gap clearance increasing can be performed by increasing the maximum blade angle and consequently the blade cutback to an amount that appears to be necessary to reach the targeted full load operating point. By doing this, the gap clearance between the inner edge blade and the hub is increased downstream and upstream to the blade axis. This is known as "over - tilting". The gap clearance downstream and upstream may be managed differently according to achievable performance of the said turbine.

By doing so, it has been observed a significant improvement of the hydraulic efficiency, mainly at full load when utilizing a more divergent runner tip. However, at the optimum load, it could appear necessary to reduce such gap clearance in order at least to keep operations at high efficiency.

The runner unit according to the present invention, as it will be clear from the detailed description of an exemplary and non-limiting embodiment, allows adjusting the gap clearance downstream and between the runner end tip portion and the inner edge of the blades. This gap clearance depends on the angular position of the runner blades.

At high load, the runner end tip portion of a double regulated turbine is in a raised, that is retracted, position such to allow a diverging runner tip and thereby a better feeding in flow at the central part of the draft tube cone, below the runner, and at the draft tube itself. The runner end tip portion in this position also shows a similar hydraulic behaviour to the one obtained by over-tilting the blades of a conventional runner hub.

For a lower load which requires a lower blade angle value, the runner end tip portion is moved downstream (according to the axial flow direction), relative to the runner body, to reach an extracted position. Such operative configuration allows to have a similar configuration to the one obtained by means of a non-over tilting of the blade with a conventional runner hub.

Advantageously, an over-tilted set of blades allows reaching a higher output thanks to a higher blade angle value.

As a consequence, it also allows shifting power saturation which one can observed on some runner designs to higher flow.

According to an aspect of the invention, it is provided a runner unit for a hydro turbine, which comprises a runner body, at least one blade rotatably mounted thereon and an end tip portion, wherein the end tip portion is movable relative to the runner body between an extended operative position and a retracted operative position.

According to a preferred aspect of the invention, the runner unit comprises a mechanism interposed between the rotatable blade and the end tip portion, the mechanism being configured to adjust the position of the end tip portion based on an angle of rotation of the blade.

According to a preferred aspect of the invention, the mechanism comprises a piston adapted to reciprocate along a shaft of the runner unit and has an upstream portion coupled to the blade to cause its rotation and a downstream portion integral to the runner end tip.

According to a preferred aspect of the invention, the end tip portion comprises an annular seal member coupled to the downstream portion of the piston.

According to a preferred aspect of the invention, the annular seal member is located inside the runner body when the end tip portion is in the retracted operative position, and protrudes out of the runner body when the end tip portion is in the extended operative position.

According to a preferred aspect of the invention, the blade is rotatably fitted on the runner body by means of a trunnion portion having an annular lever coupled to the piston.

According to a preferred aspect of the invention, the annular lever comprises a pin eccentric with respect to an axis of rotation of the annular lever, the pin being hosted in a link connected to the piston.

### BRIEF DESCRIPTION OF THE DRAWINGS

The objects, advantages and other features of the present invention will become more apparent upon reading of the following non-restrictive description of preferred embodiments thereof, given for the purpose of exemplification only, with reference to the accompany drawing, through which similar reference numerals may be used to refer to similar elements, and in which:
Figure 1 shows a front sectional view of a runner unit according to the prior art;
Figure 2 shows a front sectional view of a runner unit according to the present invention, wherein the runner tip is designed according to two different positions as described previously in this document.
Figure 3 shows a front sectional view of the runner unit according to the present invention when the end tip portion is in the retracted operative position;
Figure 4 shows a front sectional view of the runner unit according to the present invention when the end tip portion is in the extracted operative position.

An exemplary preferred embodiment will be now described with reference to the aforementioned drawings.

### DETAILED DESCRIPTION OF THE INVENTION

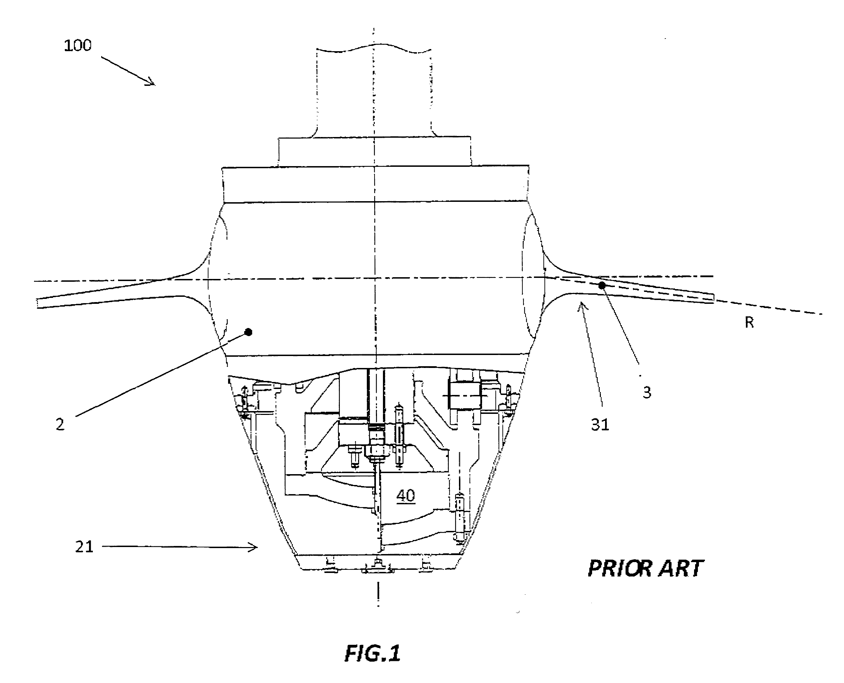

With reference to figure 1, it is shown a runner unit according to the prior art, generally indicated with numeral reference 100. Runner unit 100 includes a runner body 2, where a plurality of blades 3 is rotatably fitted. In the example herewith described rotor body 2 comprises four blades, but it will be appreciated that rotor body 2 may comprise only one blade. Runner body 2 ends with a tip portion 21.

Runner body 2 is hollow inside and includes an internal mechanism, generally indicated with numeral 40, which acts on the blades 3 to cause rotation thereof about an axis **R,** arranged substantially perpendicular to an external surface of the runner body 2 where the blade 3 is fitted. However, it will be appreciated that axis R may have any inclinations with respect to the external surface of the runner body 2 where the blade is fitted, depending on the particular design selected. The pitch of the blades 3 is regulated by mechanism 40 which depends on the operative conditions to maximise efficiency of the energy conversion process.

For the runner unit 100, a gap existing between an inner edge 31 of the blade 3 and the end tip portion 21 is defined and depends on the chosen geometry of runner unit 100.

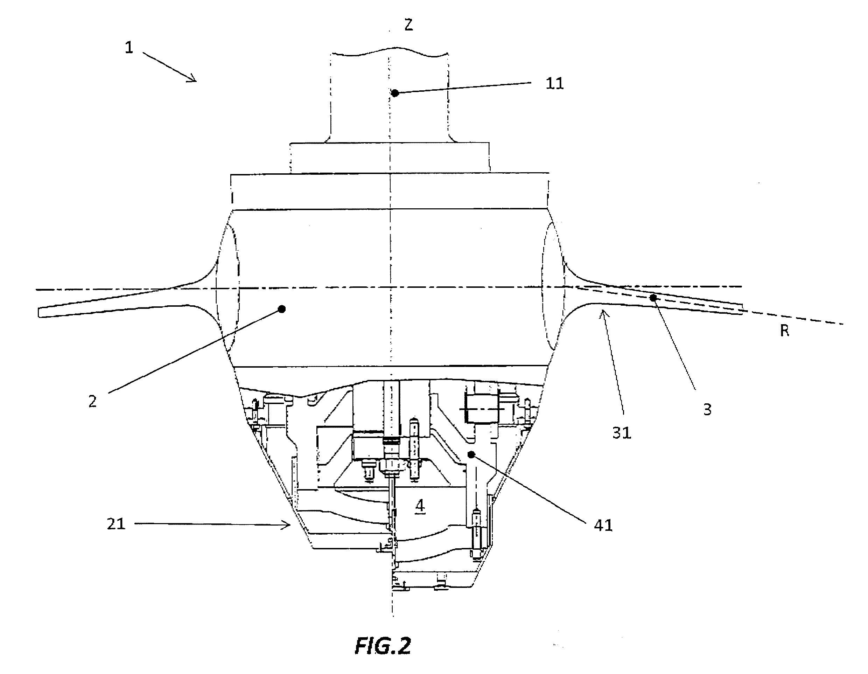

Making now reference to next figure 2, it is shown a front sectional view of a runner unit 1 according to the present invention. Runner unit 1 comprises a runner body 2 where a plurality of blades 3 is rotatably fitted and rotatable about the axis **R.**

As for the preceding case, runner body 2 in the present non-limiting example comprises four blades, but it will be appreciated that it could include one or several blades. Runner body 2 terminates with an end tip portion 21. The flow of water along the runner unit 1 causes the runner body 2, which is integral, usually by bolting, to a shaft 11, to rotate about a central axis Z for the production of electricity.

According to the present invention, the end tip portion 21 is movable, relative to the rotor body 2 and the shaft 11, between an extended, or downwards, operative position and a retracted, or inwards, operative position. In particular, figure 2 shows on the same section the two different positions: on the right side the end tip portion 21 is extracted and protrudes downwards (, whilst on the left side it is shown the runner unit 1 having the end tip portion 21 in the fully retracted position.

With the runner unit 1 according to the present invention, the existing gap between the inner edge 31 of the blade 3 and the end tip portion 21 may be advantageously adjusted, depending on the operative flow condition, to maximise efficiency.

According to a preferred and non-limiting embodiment, runner unit 1 comprises an internal mechanism 4 which is interposed between the rotatable blade 3 and the end tip portion 21. More in particular, mechanism 4 is configured such to act on the blade and cause its rotation about the axis **R.** Preferably, mechanism 4 may also be associated to the end tip portion 21, as it will be described below, and configured to adjust the position of the latter based on an angle of rotation of blade 3.

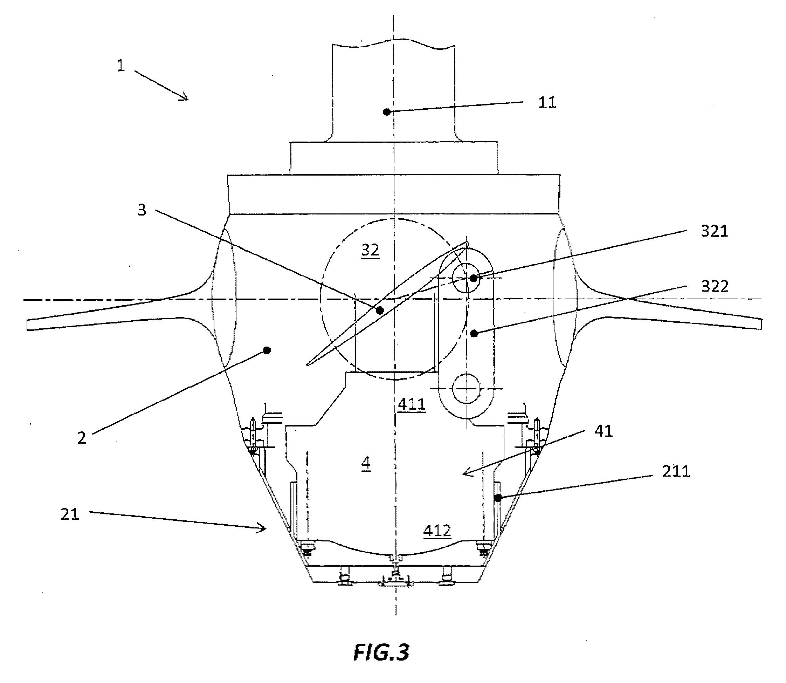

Turning to next figure 3, it is shown the runner unit 1 in the retracted operative position. Blade 3 is now shown in a frontal view for clarity reasons. Mechanism 4 includes a piston 41 (visible in figure 2) which is adapted to reciprocate along the shaft 11 of the runner unit 1. The movement of the piston 41 may be enabled by means of an oil-type drive (not shown). Piston 41 includes an upstream portion 411 which is coupled to the blade 3 to cause its rotation, and a downstream portion 412 which is integral to the end tip portion 21.

Blade 3 is rotatably fitted on the runner body 2 by means of a trunnion portion which comprises a lever 32. Lever 32 comprises a pin 321 arranged eccentric with respect to the blade axis of rotation **R** (which in this preferred embodiment is substantially perpendicular to the section plane of the figure and thus not visible), which is in turn connected to the piston 41 by means of a link member 322.. The movement of the piston 41along the shaft 11 causes the lever 32 to rotate about blade axis **R,** and thus such rotation is transferred to blade 3.

End tip portion 21 comprises an annular seal member 211 which is coupled to the downstream portion 412 of the piston 41. When the end tip portion 21 is in the retracted operative position, as shown in figure 3, the annular seal member 211 is located inside the runner body 2. In fact, in this configuration, the pitch of the blade 3 is such that the piston 41 is in an upward location.

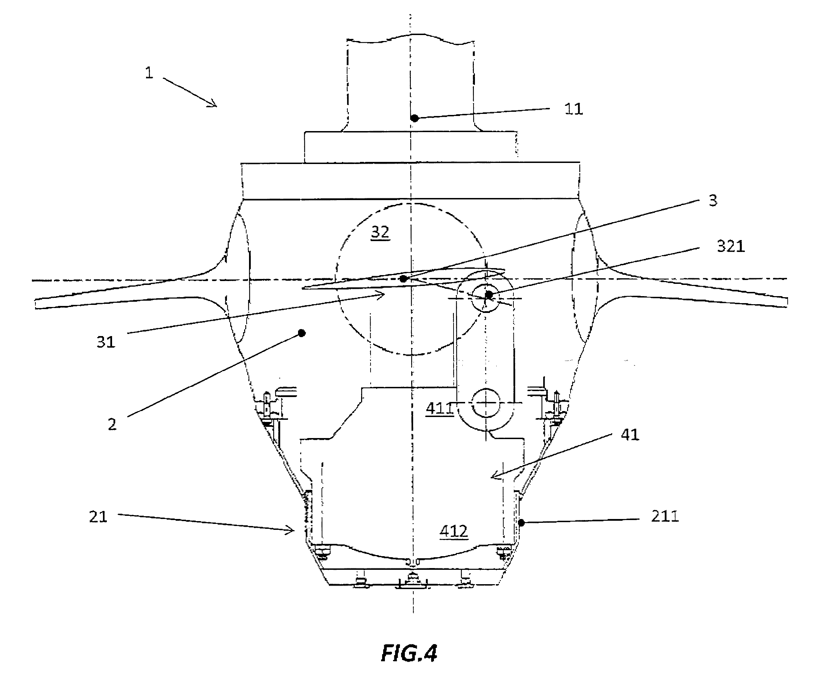

Making now reference to last figure 4, it is shown the runner unit 1 with the end tip portion 21 in the extracted operative position. The extracted end tip portion 21 is associated to a rotation of the blade in a clockwise direction. As the piston 41 moves downwards, the blade 3 rotates clockwise and the annular seal member 211 protrudes out of the runner body 2. In this way, the end tip portion 21 is movable relative to the runner body 2 such to adjust the gap clearance between end tip portion 21 and the inner edge of the blade 3.

In the exemplary embodiment herein described reference was made to the mechanism 4 associated to the blade 3, but it will be appreciated that the mechanism 4 is also associated in a similar way to all the blades fitted to the rotor body 2. Therefore the movement of piston 41 will cause synchronous rotation of all the blades.

It will also be appreciated that movement of the end tip portion 21 may be achieved with a separated servomotor, not directly linked to mechanism associated to the rotation of the blades.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. Runner unit (1) for a hydro turbine, comprising a runner body (2), at least one blade (3) rotatably mounted thereon and an end tip portion (21), ***characterised in that*** said end tip portion (21) is movable relative to said runner body (2)between an extended operative position and a retracted operative position.

2. Runner unit (1) according to the preceding claim, comprising a mechanism (4) interposed between said at least one rotatable blade (3) and said end tip portion (21), the mechanism (4) being configured to adjust the position of said end tip portion (21) based on an angle of rotation of said at least one blade (3).

3. Runner unit (1) according to the preceding claim, wherein said mechanism (4) comprises a piston (41) adapted to reciprocate along a shaft (11) of the runner unit (1) and having an upstream portion (411) coupled to said at least one blade (3) to cause its rotation and a downstream portion (412) integral to said runner end tip (21).

4. Runner unit (1) according to the preceding claim, wherein said end tip portion (21) comprises an annular seal member (211) coupled to said downstream portion (412) of said piston (41).

5. Runner unit (1) according to the preceding claim, wherein said annular seal member (211) is located inside said runner body (2) when said end tip portion (21) is in the retracted operative position, and protrudes out of said runner body (2) when said end tip portion (21) is in the extended operative position.

6. Runner unit (1) according to any of claims 3 to 5, wherein said at least one blade (3) is rotatably fitted on said runner body (2) by means of a trunnion portion having an lever (32) coupled to said piston (41).

7. Runner unit (1) according to the preceding claim, wherein said annular lever (32) comprises a pin (321) eccentric with respect to an axis of rotation of said lever (32), said pin (321) being connected to said piston (41) by a link member (322).

8. Hydro turbine, ***characterised in that*** it comprises a runner unit (1) according to any of the preceding claims.
